# EUROPÄISCHE PATENTSCHRIFT

(11) **EP 0 571 831 B1**
(45) Veröffentlichungstag und Bekanntmachung des Hinweises auf die Patenterteilung: **23.10.1996**
(21) Anmeldenummer: 93107823.2
(22) Anmeldetag: 13.05.1993
(51) Int. Cl.: C08G 18/10, C08G 18/12, C08G 18/42, C08G 18/48, C08G 18/74, C08L 75/04, C08K 7/04

(54) **Mehrstufenprozess zur Herstellung von thermoplastisch verarbeitbaren Polyurethan-Elastomeren**
Multi-stage process for the preparation of thermoplastically processable polyurethane elastomers
Procédé en plusieurs étapes de préparation d'élastomères de polyuréthane thermoplastiquement façonnables

(30) Priorität: 26.05.1992 DE 4217365
(43) Veröffentlichungstag der Anmeldung: 01.12.1993
(73) Patentinhaber: BAYER AG, 51368 Leverkusen (DE)
(72) Erfinder: Heidingsfeld, Herbert, Dipl.-Ing., W-5020 Frechen 4 (DE); Bräuer, Wolfgang, Dr., W-5090 Leverkusen 1 (DE); Müller, Friedemann, Dr., W-4040 Neuss (DE); Meister, Willi, Dr., W-4047 Dormagen (DE)

(56) Entgegenhaltungen:
- EP-A- 0 004 939
- EP-A- 0 010 601
- EP-A- 0 135 111
- DE-A- 2 610 980
- GB-A- 1 057 018
- CHEMICAL ABSTRACTS, vol. 90, no. 4, 22. Januar 1979, Columbus, Ohio, US; abstract no. 24468t, O. N. SARAKUZ ET AL. 'Developmnt of a continuous process for the production of thermoplastic elastomers based on carbon-chain oligomer diols'

## Beschreibung

Die Erfindung betrifft ein Verfahren zur kontinuierlichen Herstellung von thermoplastisch verarbeitbaren Polyurethan-Elastomeren durch einen mehrstufigen Prepolymer/Band-Prozeß.

Thermoplastische Polyurethan-Elastomere (TPU) sind seit langem bekannt. Sie sind von technischer Bedeutung aufgrund der Kombination hochwertiger mechanischer Eigenschaften mit den bekannten Vorteilen der kostengünstigen thermoplastischen Verarbeitbarkeit. Durch die Verwendung unterschiedlicher chemischer Aufbaukomponenten läßt sich eine große Variationsbreite mechanischer Eigenschaften erzielen. Eine Übersicht über TPU, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben.

TPU's werden aus linearen Polyolen, meist Polyester oder Polyether, organischen Diisocyanaten und kurzkettigen Diolen (Kettenverlängerer) aufgebaut. Sie können kontinuierlich oder diskontinuierlich hergestellt werden. Als die bekanntesten Herstellverfahren werden das sogenannte Bandverfahren und das Extruderverfahren auch technisch genutzt.

Nach der GB 1 057 018 wird aus einer im wesentlichen linearen Polyhydroxylverbindung und überschüssigem organischem Diisocyanat ein Prepolymer bei Temperaturen < 100°C hergestellt, abgekühlt und über eine Dosierpumpe einem Mischkopf zugeführt. Dort mischt man es mit einer bestimmten Menge eines niedermolekularen Diols. Das erhaltene Reaktionsgemisch wird unter Erhitzung auf bis zu 130°C auf ein Förderband gebracht. Es folgt ein Zerkleinern und Tempern des Reaktionsproduktes. Die benötigte lange Reaktionszeit der Prepolymerbildung von 1 bis 2 Stunden ist wirtschaftlich nachteilig bei diesem Verfahren.

Beim Extruderverfahren, das z.B. in der DE 1 964 834 oder DE-OS 2 059 570 beschrieben wird, werden die Aufbaukomponenten Polyhydroxylverbindung, Diisocyanat und niedermolekulare Glykole in den Extruder eingebracht. Diese werden einzeln vorgemischt bzw. als Voraddukt von Polyhydroxylverbindung und Diisocyanat direkt in den Extruder dosiert und die Reaktion im Extruder unter bestimmten Verfahrensbedingungen durchgeführt. Das so hergestellte thermoplastische Polyurethan wird als Strang extrudiert, abgekühlt und zerkleinert. Nachteilig ist, daß die nach diesem Verfahren hergestellten TPU's nicht für alle Anwendungsgebiete gleichbleibend gute Eigenschaften aufweisen. TPU's gleicher Zusammensetzung sind nach dem Extruderverfahren transparent, während sie nach dem Bandverfahren ein opakes Aussehen zeigen. Opake TPU's können gut zu Folien verarbeitet werden, während transparente TPU's hierfür aufgrund ihrer Blockneigung weniger geeignet sind.

Es bestand weiterhin die Aufgabe, nach einem wirtschaftlichen Verfahren zu suchen, mit dem sowohl harte Spritzguß- als auch weiche Folientypen gezielt und kontrolliert herzustellen sind.

Überraschenderweise wurde ein Verfahren zur kontinuierlichen Herstellung von thermoplastisch verarbeitbaren Polyurethanelastomeren gefunden, in dem durch einen mehrstufigen Prozeß, dadurch gekennzeichnet, daß man
A. ein oder mehrere im wesentlichen lineare Polyole mit Molekulargewichten von 500 bis 5000 mit einem Diisocyanat der allgemeinen Formel OCN-Z-NCO, wobei Z ein zweiwertiges organisches Radikal ist, mischt,
B. die in Stufe A. hergestellte Mischung in einem Reaktor bei Reaktionstemperaturen > 100°C im wesentlichen vollständig zum Prepolymeren umsetzt,
C. das in der Stufe B. hergestellte Prepolymer mit niedermolekularen Diol- und gegebenenfalls Triol- und/oder Diamin-Kettenverlängerern mit Molekularvon 62 bis 500 mischt, wobei insgesamt unter Hinzuziehung sämtlicher Reaktionskomponenten der Stufen A., B. und C. ein NCO/aktives H-Verhältnis von 0,9:1 bis 1,2:1 eingestellt wird,
D. die in der Stufe C. hergestellte Reaktionsmischung auf einen Träger aufbringt und bis zur Erstarrung reagieren läßt,
E. gegebenenfalls die in D hergestellte erstarrte Reaktionsmischung in einem Extruder aufschmilzt und dort Hilfsstoffe und/oder weitere Komponenten einmischt,
ein Polyurethan hergestellt wird.

Bevorzugte Polyole sind Polyester, Polyether, Polycarbonate oder ein Gemisch aus diesen.

Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyldiethanolamine, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans.

Die im wesentlichen linearen Polyetherole besitzen vorzugsweise Molekulargewichte von 500 bis 5000. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischung untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Ethandiol-polyadipate, 1,4-Butandiol-polyadipate, Ethandiol-butandiol-1,4-polyadipate, 1,6-Hexandiol-neopentylglykol-polyadipate, 1,6-Hexandiol-1,4-butandiol-polyadipate und Polycaprolactone. Die Polyesterole besitzen Molekulargewichte von 500 bis 5000.

Als organische Diisocyanate kommen beispielsweise aliphatische, cycloaliphatische, araliphatische, heterocyclische und aromatische Diisocyanate in Betracht, wie sie z.B. in Justus Liebigs Annalen der Chemie, 562, Seiten 75 bis 136, beschrieben werden.

Im einzelnen seien beispielhaft genannt: aliphatische Diisocyanate, wie Hexamethylendiisocyanat, cycloaliphatische Diisocyanate, wie Isophorondiisocyanat, 1,4-Cyclohexandiisocyanat, 1-Methyl-2,4- und -2,6-cyclohexandiisocyanat sowie die entsprechenden Isomerengemische, 4,4'-, 2,4'- und 2,2'-Dicyclohexylmethandiisocyanat sowie die entsprechenden Isomerengemische und vorzugsweise aromatische Diisocyanate wie 2,4-Toluylendiisocyanat, Gemische aus 2,4- und 2,6-Toluylendiisocyanat, 4,4'-, 2,4'- und 2;2'-Diphenylmethandiisocyanat, Gemische aus 2,4'- und 4,4'-Diphenylmethandiisocyanat, urethanmodifizierte flüssige 4,4'- und/oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, Dicyclohexylmethandiisocyanat, Isophorondiisocyanat, Dicyclohexylmethandiisocyanat, Diphenylmethandiisocyanat-Isomerengemische mit einem 4,4'-Diphenylmethandiisocyanatgehalt von größer als 96 Gew.-% und insbesondere 4,4'-Diphenylmethandiisocyanat und 1,5-Naphthylendiisocyanat.

Die genannten Diisocyanate können zusammen mit bis zu 15 % (berechnet auf Diisocyanat), aber höchstens soviel eines Polyisocyanates, daß ein thermoplastisch verarbeitbares Produkt entsteht, verwendet werden. Beispiele sind Triphenylmethan-4,4',4"-triisocyanat und Polyphenyl-polymethylen-polyisocyanate.

Als Kettenverlängerungsmittel mit dem Molekulargewichten von 62 bis 500 kommen vorzugsweise aliphatische Diole mit 2 bis 14 Kohlenstoffatomen, wie z.B. Ethandiol, Hexandiol-1,6, Diethylenglykol, Dipropylenglykol und insbesondere Butandiol-1,4 in Belracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di(ß-hydroxyethyl)hydrochinon, (cyclo)aliphatische Diamine, wie z.B. Isophoron-diamin, Ethylendiamin, 1,2-, 1,3-Propylendiamin, N-Methyl-propylendiamin-1,3, N,N'-Dimethylethylen-diamin und aromatische Diamine, wie z.B. 2,4-und 2,6-Toluylen-diamin, 3,5-Diethyl-2,4- undloder -2,6-toluylen-diamin und primäre ortho-, di-, tri- und/oder tetraalkylsubstituierte 4,4'-Diaminodiphenylmethane.

Die Diol-Kettenverlängerer können zusammen mit bis zu 15 % (berechnet auf Kettenverlängerer) aber höschstens soviel eines Triols mit einem Molekulargewicht von bis zu 500, daß ein thermoplastisch verarbeitbares Produkt entsteht, verwendet werden. Beispiele sind Glycerin, Trimethylolpropan und deren niedermolekularen Alkylenoxidaddukte.

Zur Herstellung der TPU können die Aufbaukomponenten, gegebenenfalls in Gegenwart von Katalysatoren, Hilfsmitteln und/oder Zusatzstoffen in solchen Mengen zur Reaktion gebracht werden, daß das Äquivalenzverhältnis von NCO-Gruppen zur Summe der NCO-reaktiven Gruppen, insbesondere der OH-Gruppen der niedermolekularen Diole/Triole und Makrodiole 0,9:1 bis 1,20:1, vorzugsweise 0,95:1 bis 1,10:1 beträgt.

Geeignete Katalysatoren, welche insbesondere die Reaktion zwischen den NCO-Gruppen der Diisocyanate und den Hydroxylgruppen der Diolkomponenten beschleunigen, sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)octan und ähnliche sowie insbesondere organische Metallverbindungen wie Titansäureester, Eisenverbindungen, Zinnverbindungen, z.B. Zinndiacetat, Zinndioctat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0005 bis 0,1 Teilen pro 100 Teilen Polyhydroxyverbindung eingesetzt.

Neben Katalysatoren können den Aufbaukomponenten auch Hilfsmittel und/oder Zusatzstoffe einverleibt werden. Genannt seien beispielsweise Gleitmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel.

Verstärkungsmittel sind insbesondere faserartige Verstärkungsstoffe wie z.B. anorganische Fasern, die nach dem Stand der Technik hergestellt werden und auch mit einer Schlichte beaufschlagt sein können.

Nähere Angaben über die obengenannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 oder der DE-A 2 901 774 zu entnehmen.

Weitere Zusatzkomponenten, die in das TPU eingearbeitet werden können, sind Thermoplaste beispielsweise Polycarbonate, Polyester und Acrylnitrilbutadienstyrolterpolymere, insbesondere ABS. Ebenfalls können andere Elastomere wie z.B. Kautschuk, Ethylenvinlacetatpolymere, Styrolbutadiencopolymere sowie andere TPU's verwendet werden. Weiterhin zur Einarbeitung geeignet sind handelsübliche Weichmacher wie z.B. Phosphate, Phthalate, Adipate, Sebacate.

Die Komponenten der Stufe A werden bei Temperaturen oberhalb ihres Schmelzpunktes innig vermischt. Dieses wird vorzugsweise in einem Mischaggregat mit hoher Scherenergie durchgeführt. Beispielsweise können ein Mischkopf, vorzugsweise ein hochtouriger Stachelmischer, oder eine Düse verwendet werden. Die Prepolymerreaktion (Stufe B) sollte erfindungsgemäß im wesentlichen zum vollständigen Umsatz gebracht werden. Vorzugsweise sollten in dieser Stufe mehr als 80 Mol-% Polyol umgesetzt werden. Die Reaktionstemperaturen liegen oberhalb von 100°C, vorzugsweise zwischen 100°C und 250°C. Für den bevorzugten kontinuierlich ablaufenden Prozeß wird ein Rohrreaktor benutzt, dessen Länge so bemessen ist, daß im Zusammenspiel mit der Reaktionstemperatur der oben beschriebene Umsatz gewährleistet ist. Das Länge/Durchmesser-Verhältnis liegt bevorzugt zwischen 2:1 und 20:1. Umgekehrt muß bei konstanter Rohrlänge die Reaktion z.B. über die Temperatur so gesteuert werden, daß der erwähnte Umsatz erreicht wird.

In einer besonders bevorzugten Form werden die Stufen A und B in einem intensiv gerührten Rohrreaktor mit einem Länge/Durchmesser-Verhältnis von 4:1 bis 15:1 durchgeführt. Es kann aber auch die Kombination Düse/Rohrreaktor, gegebenenfalls mit Rührung, verwendet werden.

In der Stufe C wird das in Stufen A und B hergestellte Prepolymer mit den niedermolekularen Diol- und gegebenenfalls Triol- und/oder Diamin-Kettenverlängerern vermischt. In dem bevorzugten kontinuierlichen Prozeß sollte die Mischung direkt nach der weitgehend beendeten Prepolymerreaktion erfolgen. Auch für diese Stufe wird ein mit hoher Scherenergie arbeitendes Mischaggregat bevorzugt. Beispielhaft seien ein Mischkopf, eine Düse oder ein Schneckenextruder genannt. Die Mischung kann auch nach erfolgter Prepolymerreaktion im letzten Teil des obengenannten gerührten Rohrreaktors durchgeführt werden.

In der Stufe D wird das in Stufe C hergestellte Reaktionsgemisch direkt und kontinuierlich auf einen Träger. bevorzugt ein Förderband, aufgebracht, wo man es bis zur Erstarrung des Materials reagieren läßt. Bevorzugt wird dabei das Förderband durch eine Heizzone mit einer vorgegebenen Temperatur >110°C geführt. Die Geschwindigkeit des Förderbandes wird in Abhängigkeit von der Heiztemperatur so eingestellt, daß die Kettenverlängerungsreaktion im wesentlichen zum vollständigen Umsatz gebracht wird.

In einer weiteren erfindungsgemäßen Variante kann die auf dem Förderband erstarrte Reaktionsmischung kontinuierlich in ein Extruder eingeführt werden. Bevorzugt werden die bekannten Extruder, wie z.B. Einwellen-und Zweiwellenextruder sowie Busskneter benutzt. Die Temperaturen der Extrudergehäuse werden so gewählt, daß das erstarrte Reaktionsgemisch aufgeschmolzen, die Kettenverlängerungsreaktion zum vollständigen Umsatz gebracht und die mögliche Einarbeitung der oben erwähnten Hilfsstoffe bzw. der weiteren Komponenten bei größtmöglichster Produktschonung durchgeführt werden kann.

Nach dem erfindungsgemäßen mehrstufigen PrepolymerProzeß können TPU's aufgrund der in jeder Verfahrensstufe optimalen Bedingungen in einem breiten Eigenschaftsspektrum gezielt und kontrolliert mit nur sehr geringen Eigenschaftschwankungen hergestellt werden.

Die so erhaltenen Produkte besitzen sehr gute mechanische Eigenschaften und eignen sich zur Herstellung von Spritzgußartikeln und Polyurethanfolien.

### Beispiel 1

100 Gew.-Teile eines Poly-butandiol-ethers mit einem Molgewicht von ca. 1000 wurden auf 180°C erhitzt und mittels einer Zahnradpumpe in ein mit einem Stachelmischer ausgerüstetes Rohr dosiert. Mittels einer zweiten Zahnradpumpe wurden in das gleiche Rohr 50 Gew.-Teile geschmolzenes (50°C) 4,4'-Diphenylmethandiisocyanat (MDI) gepumpt. Das Rohr hat ein Länge/Durchmesser-Verhältnis von 8. Die Drehzahl des Mischers betrug ca. 1500 U/min. Die Dosiergeschwindigkeit stellte man so ein, daß das Prepolymergemisch den Rohrreaktor mit einem Umsatz¹⁾ von ca. 95 Mol-% bez. Polyether verließ.

Das Prepolymer wurde anschließend kontinuierlich in einem direkt angeschlossenen Mischkopf mit 10 Gew.-Teilen Butandiol (60°C), die mittels einer Zahnradpumpe zudosiert wurden, kurz intensiv vermischt.

Das erhaltene Reaktionsgemisch wurde direkt auf ein Förderband aufgebracht, welches für ca. 1 Minute kontinuierlich durch eine mit 130°C beheizte Zone lief.

Am Ende der Strecke wurde die erstarrte Schmelze an Luft abgekühlt und granuliert. Das Granulat wurde durch Spritzguß zu Prüfkörper verarbeitet, an denen die in der Tabelle aufgeführten Eigenschaften gemessen wurden.
- ¹⁾ Umsatzbestimmung:: Produktproben wurden in Dibutylaminlösung abgestoppt. Rücktitration mit HCl ergab den nicht umgesetzten Rest-NCO-Gehalt, aus dem der Umsatz berechnet werden kann.

Die hergestellten Formkörper waren gut entformbar. Die aus den Granulaten erhaltenen Schlauchfolien ließen sich gut extrudieren.

### Beispiel 2

Analog Beispiel 1 wurde der Poly-butandiol-ether auf 200°C erhitzt und im Rohrreaktor zum Prepolymer umgesetzt. Die Dosiergeschwindigkeit wurde so erhöht, daß das Prepolymer den Reaktor wiederum mit ca. 95 % Umsatz verließ.

Die hergestellten Formkörper waren gut entformbar. Die aus den Granulaten erhaltenen Schlauchfolien ließen sich gut extrudieren.

### Beispiel 3

Analog Beispiel 1 wurden 100 Gew.-Teile eines Poly-butandiol-1,4-adipates mit einem Molgewicht von ca. 2250 auf 140°C erhitzt mit 114 Gew.-Teilen MDI zum Prepolymer umgesetzt. Das erreichte Umsatzniveau im Rohrreaktor betrug 98 %.

Im Mischkopf wurde das Prepolymer mit einem Gemisch von 35 Gew.-Teilen Butandiol, 1,75 Gew.-Teilen Hexandiol und 1,27 Gew.-Teilen Stearylalkohol vermischt.

Die am Ende des Förderbandes erstarrte Schmelze wurde in einen Zweiwellenextruder mit einem Durchmesser von 53 mm und Gehäusetemperaturen von 140°C bis 200°C eingezogen. In der Mitte des Extruders dosierte man mit Dosierwaagen 1,5 Gew.-Teile Bis-ethylen-stearylamid und 34 Gew.-Teile eines ABS-Pulvers (Novodur der Firma Bayer).

Am Ende der Schnecke wurde die heiße Schmelze als Strang abgezogen, im Wasserbad gekühlt und granuliert.

Die hergestellten Formkörper waren gut entformbar.

### Beispiel 4

Analog Beispiel 3 wurden 100 Gew.-Teile eines Polybutandiol-1,4-adipates mit einem Molgewicht von ca. 2250 mit 40 Gew.-Teilen MDI zum Prepolymer im Rohrreaktor bis 97 % umgesetzt.

Im Mischkopf wurde das Prepolymer mit 10,5 Gew.-Teilen Butandiol vermischt. Nach dem Förderband zog man den Strang in einen Einwellenextruder mit einem Durchmesser von 60 mm und Gehäusetemperaturen von 180° bis 220°C ein. Die Drehzahl betrug 60 U/min.

In das erste Extrudergehäuse dosierte man 0,6 Gew.-Teile Bis-ethylen-stearylamid.

Die hergestellten Formkörper waren gut entformbar. Die aus den Granulaten erhaltenen Schlauchfolien ließen sich gut extrudieren.

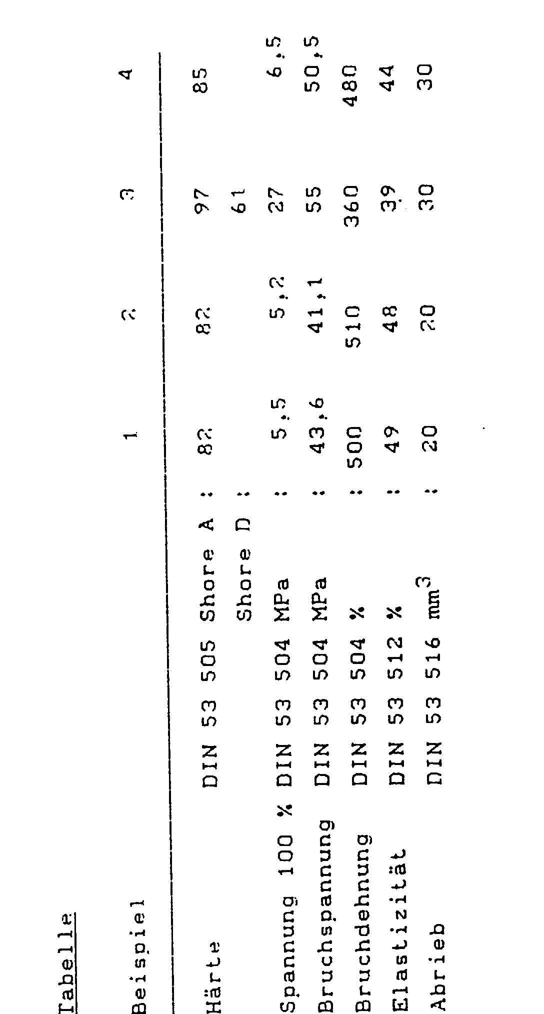

## Patentansprüche

1. Verfahren zur kontinuierlichen Herstellung von thermoplastisch verarbeitbaren Polyurethanelastomeren durch einen mehrstufigen Prozeß, dadurch gekennzeichnet, daß man
A. ein oder mehrere im wesentlichen lineare Polyole mit Molekulargewichten von 500 bis 5000 mit einem Diisocyanat der allgemeinen Formel OCN-Z-NCO, wobei Z ein zweiwertiges organisches Radikal ist, mischt,
B. die in Stufe A. hergestellte Mischung in einem Reaktor bei Reaktionstemperaturen > 100°C im wesentlichen vollständig zum Prepolymeren umsetzt,
C. das in der Stufe B. hergestellte Prepolymer mit niedermolekularen Diol- und gegebenenfalls Triol- und/oder Diamin-Kettenverlängerern mit Molekulargewichten von 62 bis 500 mischt, wobei insgesamt unter Hinzuziehung sämtlicher Reaktionskomponenten der Stufen A., B. und C. ein NCO/aktives H-Verhältnis von 0,9:1 bis 1,2:1 eingestellt wird,
D. die in der Stufe C. hergestellte Reaktionsmischung auf einen Träger aufbringt und bis zur Erstarrung reagieren läßt,
E. gegebenenfalls die in D hergestellte erstarrte Reaktionsmischung in einem Extruder aufschmilzt und dort Hilfsstoffe und/oder weitere Komponenten einmischt

2. Verfahren zur Herstellung von thermoplastisch verarbeitbaren Polyurethanelastomeren gemäß Anspruch 1, dadurch gekennzeichnet, daß man
A. ein oder mehrere im wesentlichen lineare Polyester, Polyether, Polycarbonate oder ein Gemisch aus diesen mit Molekulargewichten von 500 bis 5000 mit einem oder mehreren der Diisocyanate, Dicyclohexylmethandiisocyanat, Isophorondiisocyanat, Hexamethylendiisocyanat, Naphthylendiisocyanat oder einem Diphenylmethandiisocyanat-Isomerengemisch mit einem 4,4'-Diphenylmethandiisocyanatgehalt von größer 96 Gew.-% und insbesondere mit 4,4'-Diphenylmethandiisocyanat kontinuierlich in einem Mischaggregat mit hoher Scherenergie mischt,
B. die in Stufe A. hergestellte Mischung kontinuierlich in einem Rohr-Reaktor mit einem Länge/Durchmesser-Verhältnis von 2:1 bis 20:1 bei Reaktionstemperaturen von 100 bis 250°C im wesentlichen vollständig zum Prepolymeren umsetzt,
C. das in der Stufe B. hergestellte Prepolymer mit einem oder mehreren der Kettenverlängerer Ethylenglykol, Butandiol, Hexandiol, 1,4-Di-(β-hydroxyethyl)-hydrochinon und gegebenenfalls Triol-Kettenverlängerern kontinuierlich in einem mit hoher Scherenergie arbeitenden Mischaggregat mischt, wobei insgesamt unter Hinzuziehung sämtlicher Reaktionskomponenten der Stufen A., B. und C. ein NCO/aktives H-Verhältnis von 0,95:1 bis 1,1:1 eingestellt wird,
D. die in der Stufe C. hergestellte Reaktionsmischung kontinuierlich auf ein Förderband aufbringt und sie bis zur Erstarrung des Materials durch eine Heizzone mit einer vorgegebenen Temperatur >110°C führt,
E. gegebenenfalls die in D. hergestellte erstarrte Reaktionsmischung in einem Extruder aufschmilzt und dort Hilfsstoffe und/oder weitere Komponenten einmischt.

3. Verfahren zur Herstellung von thermoplastisch verarbeitbaren Polyurethanelastomeren gemäß Anspruch 1 oder 2, dadurch gekennzeichnet, daß die Mischung und die Prepolymer-Reaktion der Stufen A. und B. gemeinsam in einem mit hoher Scherenergie gerührten Rohrreaktor mit einem Länge/Durchmesser-Verhältnis von 4:1 bis 15:1 bei Reaktionstemperaturen von 100°C bis 250°C und einem Umsatz > 80 mol-% bez. Polyol durchgeführt werden.

4. Verfahren zur Herstellung von thermoplastisch verarbeitbaren Polyurethanelastomeren gemäß Anspruch 1 bis 3, dadurch gekennzeichnet, daß in Stufe E in den Extruder als weitere Komponenten ein Thermoplast, insbesondere Polycarbonat, Polyester und/oder ABS, oder ein Verstärkungsstoff, insbesondere eine anorganische Faser, oder andere Elastomere und Weichmacher gegeben werden.

## Claims

1. A multistage process for the continuous production of thermoplastically processable polyurethane elastomers, characterised in that
A. one or more substantially linear polyols having molecular weights of 500 to 5000 is/are mixed with a diisocyanate corresponding to the general formula OCN-Z-NCO, wherein Z is a divalent organic radical,
B. the mixture prepared in step A. is reacted substantially completely in a reactor at reaction temperatures of > 100°C to form the prepolymer,
C. the prepolymer prepared in step B. is mixed with low-molecular diol chain extenders and optionally triol chain extenders and/or diamine chain extenders having molecular weights of 62 to 500, with a total ratio of NCO to active H of 0.9:1 to 1.2:1 being established, taking into account all the reaction components of steps A., B. and C,
D. the reaction mixture prepared in step C. is applied to a support and allowed to react until it has solidified,
E. optionally the solidified reaction mixture prepared in D is melted in an extruder and there auxiliary substances and/or other components are incorporated.

2. A process for the production of thermoplastically processable polyurethane elastomers according to claim 1, characterised in that
A. one or more substantially linear polyesters, polyethers, polycarbonates or a mixture thereof having molecular weights of 500 to 5000 is/are continuously mixed with one or more of the diisocyanates dicyclohexylmethane diisocyanate, isophorone diisocyanate, hexamethylene diisocyanate, naphthylene diisocyanate or a mixture of diphenylmethane diisocyanate isomers containing more than 96 wt.% of 4,4'-diphenylmethane diisocyanate, and in particular with 4,4'-diphenylmethane diisocyanate, in a mixing unit at a high shear energy,
B. the mixture prepared in step A. is continuously reacted substantially completely to form the prepolymer in a tubular reactor having a length to diameter ratio of 2:1 to 20:1 at reaction temperatures of 100°C to 250°C,
C. the prepolymer prepared in step B. is continuously mixed with one or more of the chain extenders ethylene glycol, butanediol, hexanediol, 1,4-di(β-hydroxyethyl)hydroquinone and optionally with triol chain extenders in a mixing unit operating at high shear energy, with a total ratio of NCO to active H of 0.95:1 to 1.1:1 being established, taking into account all the reaction components of steps A., B. and C,
D. the reaction mixture prepared in step C. is continuously applied to a conveyor belt which is passed through a heating zone at a preset temperature of >110°C until the material solidifies,
E. optionally the solidified reaction mixture prepared in D is melted in an extruder and there auxiliary substances and/or other components are incorporated.

3. A process for the production of thermoplastically processable polyurethane elastomers according to claim 1 or 2, characterised in that the mixing and the prepolymer reaction of steps A. and B. are carried out together in a tubular reactor having a length to diameter ratio of 4:1 to 15:1, stirred at high shear energy at reaction temperatures of 100°C to 250°C, and with a conversion of > 80 mol-% referred to polyol.

4. A process for the production of thermoplastically processable polyurethane elastomers according to claims 1 to 3, characterised in that in step E. a thermoplastic, in particular polycarbonate, polyester and/or ABS, or a reinforcing material, in particular an inorganic fibre, or other elastomers and plasticisers, are introduced as additional components into the extruder.

## Revendications

1. Procédé pour la fabrication continue d'élastomères de polyuréthannes aptes au travail thermoplastique dans un procédé à plusieurs stades, caractérisé en ce que
A. on mélange un ou plusieurs polyols essentiellement linéaires, de poids moléculaire 500 à 5000, avec un diisocyanate de formule générale OCN-Z-NCO dans laquelle Z représente un radical organique divalent,
B. on convertit le mélange obtenu au stade A., dans un réacteur, à des températures de réaction supérieures à 100°C, en le prépolymère, dans une réaction essentiellement complète,
C. on mélange le prépolymère obtenu au stade B. avec des diols et le cas échéant des triols et/ou des diamines à bas poids moléculaire, de poids moléculaire 62 à 500, servant d'agents d'allongement des chaînes, en réglant au total, tenu compte de tous les composants de réaction des stades A., B. et C., à un rapport NCO/H actif de 0,9:1 à 1,2:1,
D. on transfère le mélange de réaction préparé au stade C. sur un support où on le laisse réagir jusqu'à solidification,
E. le cas échéant, on fond le mélange de réaction solidifié obtenu au stade D. dans une extrudeuse dans laquelle on mélange des produits auxiliaires et/ou autres composants.

2. Procédé pour la fabrication d'élastomères de polyuréthannes aptes au travail thermoplastique selon la revendication 1, caractérisé en ce que
A. on mélange en continu dans un appareil approprié, à haute énergie de cisaillement un ou plusieurs polyesters, polyéthers, polycarbonates essentiellement linéaires ou un mélange de tels composants, de poids moléculaire 500 à 5 000, avec un ou plusieurs diisocyanates choisis parmi le dicyclohexylméthane-diisocyanate, l'isophoronediisocyanate, l'hexaméthylènediisocyanate, le naphtylènediisocyanate ou un mélange d'isomères du diphénylméthane à une teneur supérieure à 96 % en poids en le 4,4'-diphénylméthanediisocyanate, et plus spécialement le 4,4'-diphénylméthanediisocyanate,
B. on convertit le mélange obtenu au stade A., en continu, dans un réacteur tubulaire ayant un rapport longueur/diamètre de 2:1 à 20:1, à des températures de réaction de 100 à 250°C, en le prépolymère, dans une réaction essentiellement complète,
C. on mélange en continu le prépolymère préparé au stade B. avec un ou plusieurs agents d'allongement des chaînes choisis parmi l'éthylèneglycol, le butanediol, l'hexanediol, la 1,4-di-(β-hydroxyéthyl)hydroquinone, et le cas échéant des agents d'allongement des chaînes consistant en triols, dans un appareil approprié à haute énergie de cisaillement, en réglant au total, tenu compte de tous les composants de réaction des stades A., B. et C., à un rapport NCO/H actif de 0,95:1 à 1,1:1,
D. on envoie en continu le mélange de réaction préparé au stade C. sur une bande transporteuse qui le conduit, jusqu'à solidification de la matière, au travers d'une zone de chauffage présentant une température déterminée supérieure ou égale à 110°C,
E. le cas échéant, on fond le mélange de réaction solidifié obtenu au stade D. dans une extrudeuse dans laquelle on mélange les produits auxiliaires et/ou d'autres composants.

3. Procédé de préparation d'élastomères de polyuréthannes aptes au travail thermoplastique selon la revendication 1 ou 2, caractérisé en ce que le mélange et la réaction de formation du prépolymère des stades A. et B. sont réalisés ensemble, dans un réacteur tubulaire agité sous haute énergie de cisaillement à un rapport longueur/diamètre de 4:1 à 15:1, à des températures de réaction de 100 à 250°C et avec un taux de conversion supérieur à 80 mol % par rapport au polyol.

4. Procédé de préparation d'élastomères de polyuréthannes aptes au travail thermoplastiques selon les revendications 1 à 3, caractérisé en ce que, au stade E., dans l'extrudeuse, on introduit en tant qu'autres composants une résine thermoplastique, en particulier un polycarbonate, un polyester et/ou un polymère ABS, ou une matière renforçante, en particulier une fibre minérale, ou bien d'autres élastomères et des plastifiants.
